# EUROPÄISCHE PATENTSCHRIFT

(11) **EP 1 775 330 B1**
(45) Veröffentlichungstag und Bekanntmachung des Hinweises auf die Patenterteilung: **30.03.2011**
(21) Anmeldenummer: 06121601.6
(22) Anmeldetag: 02.10.2006
(51) Int. Cl.: C09J 7/02

(54) **Weiterreißfestes Klebeband**
Tear-resistant adhesive tape
Ruban adhésif résistant à la déchirure

(30) Priorität: 12.10.2005 DE 102005049343
(43) Veröffentlichungstag der Anmeldung: 18.04.2007
(73) Patentinhaber: TESA SE, 20253 Hamburg (DE)
(72) Erfinder: Rodewald, Ilse, 22527 Hamburg (DE); Wahlers-Schmidlin, Andreas, 21720 Guderhandviertel (DE); Grittner, Norbert, 22459 Hamburg (DE); Yun, Petra, 20251 Hamburg (DE)

(56) Entgegenhaltungen:
- GB-A- 2 169 456
- US-A- 2 750 315
- US-A- 4 636 427

## Beschreibung

Die Erfindung betrifft ein durch Filamente verstärktes Klebeband, wie es beispielsweise in der US 2,750,315 A beschrieben ist, sowie dessen Verwendung.

Das Problem der Weiterreißfestigkeit von Klebebändern ist hinreichend bekannt. Lösungen für dieses Problem beruhen auf verschiedenen Ansätzen zum Beispiel auf der Faserverstärkung des Trägermaterials. Üblich sind so genannte "Filament"-Klebebänder mit unidirektionalen Längs-Gelegen oder bidirektionalen Geweben oder Gelegen, die aus gezwirnten oder getengelten Garnen bestehen. Diese Garne können zum Beispiel aus künstlichen Endlosfasern, aber auch aus Naturfasern bestehen. Die Fasern dieser Art von Klebebändern sind oftmals zu örtlich fixierten Faser- oder Filamentbündeln zusammengehalten.

Diese örtliche Fixierung wird durch Einbettung der Gelege oder Gewebe in die relativ dicke Klebmasseschicht erreicht. Dabei wird die Schichtdicke so hoch gewählt, dass die Einzelfilamente oder Filamentbündel vollständig im Inneren dieser Schicht liegen und dass weder ein direkter Kontakt zwischen Träger und Filament zu Stande kommt, noch dass die Filamente an der Verklebungsseite des Tapes aus der Masse austreten. Wie in US 2,750,315 A beschrieben, wird die Klebemasse zu diesem Zweck in zwei Schichten aufgetragen, zwischen welche die Fasern eingelegt werden. Nach dem in US 2,750,315 A beschriebenen Verfahren werden sowohl Gelege und Gewebe aus Filamentbündeln als auch Gelege aus Einzelfilamenten verwendet. Durch eine gute Durchdringung der Gewebe/Gelege mit der Klebmasse entsteht auf diese Weise eine homogene Schicht Klebmasse, die die Fasern vollständig umhüllt.

Insbesondere im medizinischen Bereich sind bereits verstärkte Trägermaterialien bekannt.

So beschreibt die AU 73555/74 A beispielhaft ein mit Glasfäden verstärktes Trägermaterial für medikale Anwendungen. US 4,668,563 A beschreibt ebenfalls ein mit Glasfaser verstärktes Material

Aus der DE 197 29 905 A1 ist ein im Wesentlichen unelastisches Trägermaterial auf Basis von Geweben oder Gewirken bekannt, dem hochfeste Fasern, Zwirne, Mischzwirne oder Fäden -sowohl aus einem Material auf organischer als auch auf anorganischer Basis- mit einer Höchstzugkraft von mindestens 60 cN/tex, bevorzugt 80 bis 500 cN/tex, zugesetzt werden, wobei die hochfesten Fasern, Zwirne, Mischzwirne oder Fäden eine Wasseraufnahme von weniger als 10%, bevorzugt weniger als 5%, besonders bevorzugt weniger als 3%, zeigen und die hochfesten Fasern, Zwirne, Mischzwirne oder Fäden dem Trägermaterial eine Höchstzugkraft von mindestens 50 N/cm, bevorzugt 60 bis 450 N/cm, besonders bevorzugt 65 bis 250 N/cm verleihen.

Das Trägermaterial kann dabei mit einem Faden oder mehreren Fäden aus Monofil, Multifil, Stapelfasergarn oder Spinnfasergarn und/oder mit orientierten hochfesten Fasern verstärkt sein. Weiter können auch Zwirne oder Mischzwirne, insbesondere Siromischzwirne, eingesetzt werden. Für spezielle Anwendung können auch Mischfaserfäden, -garne oder - zwirne eingesetzt werden. Hierbei kann es sich zum Beispiel um Umwindegarne oder spezielle Stapelfaserumwindegarne handeln.

Vorteilhaft ist, dass durch die Kombination von hochfesten Verstärkungen mit Basismaterialien spezielle Eigenschaften schon in dem Verstärkungsfaden erreicht werden kann. Beispielhaft sind hier die Kombinationen von Glas oder Kohlenstoff und Baum- oder Zellwolle.

Die Fasern oder Fäden können dabei aus organischen oder anorganischen Materialien bestehen, so beispielsweise und bevorzugt aus Glas, Kohlenstoff (Carbon) oder speziellen Polyamiden bestehen.

Das Trägermaterial ist weiter vorzugsweise mit den Fäden und/oder hochfesten Fasern laminiert. Die Fäden und/oder die hochfesten Fasern sollten fest mit dem Trägermaterial verbunden sein. Dies kann durch direktes Einarbeiten oder Einlassen der Fasern, Fäden oder Zwirne beziehungsweise Mischzwirne in den Träger geschehen, wie Einweben bei Geweben, Einstricken bei Gewirken, Einbetten beziehungsweise Einfügen beim Herstellungsverfahren von Folien, Gelegen oder Schaumstoffen und Vliesen.

Die Fasern oder die hochfesten Fäden können aber auch nachträglich mit dem Träger verbunden werden, beispielsweise sind das Verschweißen oder Auflaminieren mit einer entsprechenden Verbindungsschicht genannt. Das Einlegen in die Klebmassenschicht bietet sich unter anderem hierzu an.

Aufgabe der Erfindung ist es, ein Klebeband zur Verfügung zu stellen, das bei vergleichsweiser geringer Dicke eine in Querrichtung (cross direction, cd) sehr hohe Weiterreißfestigkeit und eine in Längsrichtung (machine direction, md) sehr hohe Zugfestigkeit aufweist.

Gelöst wird diese Aufgabe durch ein Klebeband, wie es in Anspruch 1 dargelegt ist. Gegenstand der Unteransprüche sind dabei Weiterbildungen des erfindungsgemäßen Klebebands sowie Verwendungen desselben.

Demgemäß betrifft die Erfindung ein Klebeband mit einem Trägermaterial, auf das zumindest einseitig eine Klebemasse, insbesondere Haftklebemasse aufgebracht ist, wobei das Trägermaterial einen Stützträger aus einer Kunststofffolie oder einem Papier sowie eine Binderschicht, die zwischen Stützträger und einer Klebemasseschicht angeordnet ist, aufweist und das Trägermaterial nichthaftklebrig ist.
Der Binder der Binderschicht basiert auf Mischungen aus SBR und Acrylat und in der Binderschicht sind ungezwirnte und ungetengelte Einzelfilamente in Längsrichtung eingelassen, die vollständig von der Binderschicht umschlossen sind und die eine Feinheit zwischen 4 und 8 dtex aufweisen.

Die Einzelfilamente sind vorzugsweise Endlosfilamente und weisen erfindungsgemäß eine Feinheit zwischen 4 und 8 dtex, vorzugsweise 5 dtex auf. In einer vorteilhaften Ausführungsform sind alle Filamente Endlosfilamente.
Die Filamente liegen idealerweise in dichtester Kugelpackung, so dass keine oder kaum Lücken zwischen den von dem Binder ummantelten Filamenten vorahnden sind. In einer bevorzugten Ausführungsform befinden sich zwischen 400 und 800 Filamente pro Zentimeter Breite in dem Trägermaterial, insbesondere zwischen 500 und 600, ganz besonders bevorzugt 550.

Des Weiteren hat es sich als vorteilhaft erwiesen, wenn die Einzelfilamente in einer zum Stützträger parallel ausgerichteten Lage oder höchstens in drei zum Stützträger parallel ausgerichteten Lagen regelmäßig angeordnet sind, und zwar wenn die Filamente eine Feinheit von 4 bis 8 dtex aufweisen.
In einer Lage sind dabei jeweils die Filamente parallel nebeneinander angeordnet.
In einer anderen vorteilhaften Ausführungsform sind die Einzelfilamente in einer zum Stützträger parallel ausgerichteten Lage oder höchstens in fünf zum Stützträger parallel ausgerichteten Lagen regelmäßig angeordnet, und zwar wenn die Filamente eine Feinheit von 2 bis 6 dtex aufweisen.

Je nach gewünschtem Einsatzzweck sind auch mehr als fünf Lagen Filamente möglich, wobei mit steigender Zahl die Dicke des Trägermaterials zunimmt, gleichzeitig aber auch die Festigkeit.

Sodann sollten die Einzelfilamente vorzugsweise aus hochfesten Fasern geringer Reißdehnung wie zum Beispiel Glasfasern oder Kohlenstofffasern (Carbon) oder auch aus verstreckten Polymerfasern wie Polyesterfasern, Polypropylenfasern, Polyethylenfasern, Polyamidfasern oder Aramid-Fasern.

Durch die als vorteilhaft erkannte fehlende Verzwirnung und Vertengelung, der parallelen in Längsrichtung ausgerichteten Anordnung entspricht die Länge der Filamente nahezu exakt der Lauflänge des Trägermaterials, und zwar somit dem Minimum der theoretische möglichen Länge. Eine auftretende parallele Zugkraft auf das Klebeband wirkt so auf jedes Filament unmittelbar und wird gleichzeitig bedarfsgerecht von vielen Filamenten übernommen. Dies führt zu einer besonders effektiven Kraftaufnahme.
Durch die fehlende Verzwirnung und Vertengelung haben die Filamente zusätzlich die Möglichkeit, auf eine nicht parallele Zugbelastung mit individueller Längenänderung zu reagieren. Die führt zu einer optimalen Kraftverteilung über die Klebebandbreitebreite.

Im Gegensatz zu dem aus der US 2,750,315 A bekannten Verfahren wird bei vorliegender Erfindung zunächst ein faserverstärkter Träger hergestellt. Hierzu werden Einzelfilamente in einer geordneten Anordnung längs zur Maschinenrichtung parallel nebeneinander gelegt und auf einem Trägermaterial mit Hilfe eines Binders, insbesondere einer nicht haftklebrigen Imprägnierung fixiert.
Die Einzelfilamente werden möglichst exakt parallel positioniert, sodass eine unidirektionale, aus einer oder wenigen Lagen übereinander bestehende Filamentschicht entsteht.
Anstatt die Filamente lediglich auf eine durchgehende Masseschicht aufzulegen, werden die Filamente von dem niedrigviskosen Binder vollständig imprägniert und danach damit auf dem Träger fixiert.

Im Unterschied zu dem in der US 2,750,315 A beschriebenen Material sind die Filamente erfindungsgemäß nicht in der Klebmasse.
Durch den Binder sind sie vielmehr integrativer Bestandteil des Trägermaterials, so dass kein direkter Kontakt von Filament zu Klebmasse besteht.

Binder und Klebemasse stellen somit zwei Schichten dar, die völlig unabhängig voneinander an die jeweilige Aufgabe angepasst werden können, ein Vorteil, der mit dem Klebeband, wie es die US 2,750,315 A offenbart, nicht verwirklicht werden kann.

Beim Binder handelt es sich um Mischungen auf Basis SBR oder Acrylat. Bevorzugt ist eine wässrige, weichmacherfreie anionische Dispersion eines carboxylgruppenhaltigen Acrylsäureestercopolymerisats (Acronal® 500 D).
Der Binder wird in einer vorteilhaften Ausführungsform mit 10 bis 30, bevorzugt 10 bis 20, ganz besonders bevorzugt 15 bis 17 g/m² auf die Stützfolie aufgebracht.
Der Binder kann zusätzlich zur Fixierung der Filamente Aufgaben einer funktionalen Schicht übernehmen.
Er kann als Primer wirken, und zwar zwischen den auftretenden Grenzflächen Stützträger (Film/Papier)/Filament/Klebmasse.

Er kann die Aufgaben einer Barriereschicht übernehmen, zum Beispiel durch Integration von UV-Absorbern den UV-Schutz der Klebmasse.
Der Binder kann als reaktiv härtendes Bindersystem ausgebildet werden, so dass er einen oder keinen Einfluss auf die Klebmasse ausübt. Gleichzeitig kann der Härtegrad des Binders durch die Reaktivkomponenten eingestellt werden. Sowohl einstellbare Härtegrade des Binders als auch einstellbare Kohäsionsgrade der Masse können durch migrierende Vernetzer erzielt werden.

Schließlich kann der Binder mit Rücksicht auf verwendete Fasern und Träger zur Erreichung eines optimalen Verbundes in Hinsicht auf
- sein viskoelastisches Verhalten
- seiner Härte/Steifigkeit
- der Festigkeit des Gesamtträgers, vornehmlich in z-Richtung,
- seine optischen Eigenschaften
angepasst werden.

Die letzte Eigenschaft ist dahingehend beispielsweise vorteilhaft, als dass die Farbe des Klebebands leicht variiert werden kann. Bei einem transparenten Stützträger wird üblicherweise die gesamte Haftklebmasse gefärbt, um ein farbiges Klebeband zu erzielen. Erfindungsgemäß reicht es, den Binder mit der gewünschten Farbe auszurüsten.

Durch die Verwendung des erfindungsgemäßen Binders entsteht nichthaftklebriges Vormaterial, das einfach im Handling und der Aufbewahrung ist.

Als Stützträgermaterial eignen sich (Krepp-)Papiere, Laminate, Folien (zum Beispiel BOPP, MOPP, PP, PE, PET, PA, PU, PVC), Schaumstoffe, geschäumte oder metallisierte Folien. Die Folien selbst können wiederum aus mehreren einzelnen Lagen besteht, beispielsweise aus zu Folie coextrudierten Lagen.
Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLLDE) sein. Geeignet sind auch Polypropylene (zum Beispiel Polypropylen-Homopolymere, Polypropylen-Random-Copolymere oder Polypropylen-Block-Copolymere).
Die Folie kann unverstreckt sein
Erfindungsgemäß hervorragend als Folien einsetzen lassen sich monoaxial und biaxial gereckte Folien. Monoaxial gerecktes Polypropylen beispielsweise zeichnet sich durch seine sehr hohe Reißfestigkeit und geringe Dehnung in Längsrichtung aus und wird beispielsweise zur Herstellung von Strapping Tapes verwendet. Möglich sind monoaxial gereckte Folien auf Basis von Polypropylen.
Besonders bevorzugt sind Folien auf Basis Polyester.

Geeignete Stützträger weisen vorzugsweise eine Dicke auf von bis zu 50 µm, weiter vorzugsweise 5 bis 25 µm, ganz besonders vorzugsweise 5 bis 15 µm.

Die Klebemasse der erfindungsgemäßen Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS) und Styrol-Butadien-Styrol (SBS)-Typen.

Daneben hat sich ein 100%-System auf Styrol-Isopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110°C bis 140°C.
Die thermische Anregung der Vernetzer kann auch durch IR-Strahlen oder hochenergetische Wechselfelder erfolgen.

Vorteilhaft haben sich als Klebemasse eine solche auf Acrylathotmelt-Basis, auf Lösemittelbasis oder auf wässriger Basis erwiesen, wobei erstere einen K-Wert von mindestens 20 aufweisen kann, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere Acronal® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch Polyurethan basieren Kleber geeignet sind.

Besonders vorteilhaft lässt sich ein einseitig klebend ausgerüstetes Klebeband, wobei der Auftrag an Klebemasse vorzugsweise zwischen 15 bis 60 g/m², weiter vorzugsweise zwischen 20 bis 30 g/m² liegt, verwenden.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nichtfusselndes Material eingesetzt wie eine Kunststofffolie oder ein gut verleimtes, langfaseriges Papier.
Die gegebenenfalls nicht mit Klebemasse ausgerüstet Seite des Klebebands kann sodann übliche Primer aufweisen.

Die Erfindung basiert in ihrer Grundfunktionsweise auf der Faserverstärkung von Klebebändern zur Erhöhung der Weiterreißfestigkeit.

Gegenüber den bekannten Trägermaterialien aus Gewebe oder Gelege, wie sie im medizinischen Sektor Verwendung finden und die mittels von Filamenten verstärkt sind ("Cross-Filament"-Tape), weist das erfindungsgemäße Klebeband erhebliche Vorteile auf.
Durch die Webstruktur eines Gewebes in einem Träger zum Beispiel erfahren die Kett-Fäden dort an den Knotenpunkten eine zusätzliche Auslenkung in z-Richtung. Diese zusätzliche Länge muss bei Zugbelastung zunächst herausgezogen werden, bevor die zugfesten Eigenschaften des Garnes zum Tragen kommen.
Im vorliegenden Fall hingegen wirkt die Belastung unmittelbar auf den Stützträger aus Folie oder Papier und Filamente gemeinsam, wodurch eine optimale Kraftaufnahme möglich ist.

In dem Trägermaterial sind sehr viele Filamente parallel nebeneinander angeordnet, was zu einem sehr homogenen Produktaufbau führt. Bei Verletzung einiger weniger Filamente im Randbereich, stoppt der Riss unmittelbar am nächsten Filament, also in unmittelbarer Nähe des ursprünglichen Endes des Risses (die Verletzungstiefe entspricht der endgültigen Einreißtiefe). Weiterhin ist die Reißfestigkeit des Trägermaterials durch den Verlust der geringen Anzahl von Filamenten kaum reduziert, das Klebeband behält seine hervorragenden Eigenschaften.
Im Falle eines Klebebands, in dessen Träger nur wenige Filament-Garne eingearbeitet sind, kann sich der Riss sehr viel weiter fortsetzen, nämlich bis zum nächsten Garn. Des Weiteren bedeutet der Verlust eines Garnes gegebenenfalls eine erhebliche strukturelle Schwächung.

Zum anderen wird durch die regelmäßige Verteilung derselben Anzahl an Filamenten auf die Fläche im Querschnitt die Dicke nivelliert. Diese Nivellierung führt zu einer Reduktion der maximalen Trägerdicke des Klebebandes.

Die als vorteilhaft erkannte Lage der Einzelfilamente in einer zum Stützträger parallel ausgerichteten Lage oder höchstens in drei sowie die gleichzeitig bevorzugte regelmäßige Verteilung bewirkt einen weiteren Vorteil.

Eine Haftklebemasse benötigt, um haftklebrig zu sein, eine gewisse Mindestschichtdicke, abhängig von der Art des Haftklebers. Diese Mindestschichtdicke muss über die gesamte Breite des Klebebandes erreicht werden. Liegt eine ungleichmäßige Faserverteilung wie zum Beispiel im Falle von Faserbündel vor, so bestimmt der höchste Punkt im Querschnitt des Klebebandes den erforderlichen Masseauftrag, da auch auf den Faserrücken beziehungsweise auch auf den Knotenpunkten in offenen Filament Geweben die erforderliche Mindestschichtdicke gegeben sein muss. Zur Auffüllung der Lücken zwischen den Faserbündeln geht viel Klebmasse ungenutzt verloren.

Ein weiterer Vorteil der vorliegenden Erfindung beruht folglich darauf, dass durch die gleichmäßige Anordnung der Filamente keine großvolumigen Lücken zwischen diesen vorliegen, welche zum Erreichen der Mindestschichtdicke über die gesamte Breite des Klebebandes aufgefüllt werden müssten. Da die gesamte Klebmasse effektiv für die Verklebungsleistung zur Verfügung steht, kann für die gleiche Klebkraft weniger Klebmasse verwendet werden, was in einer Material- und damit sowohl in einer Kosten- als auch Gewichtsersparnis resultiert.

Dieses Verbundmaterial hat den Vorteil, dass es durch die geschickte Kombination der Komponenten Träger, Binder und Faser freie Wahl der Klebmasse bietet. Da durch dieses neuartige Trägerverbundmaterial die eigentliche Haftklebmasse nicht mehr die Aufgabe der Fixierung der Fasern auf den Träger übernehmen muss, kann sie nun frei nach klebtechnischen Anforderungen gewählt werden. Lediglich eine chemische Kompatibilität der Klebmasse zum Binder ist notwendig.

Die oben genannten Schritte führen zu einem Trägermaterial mit einer Festigkeit von mindestens 250 N/mm² bei 60 µm, insbesondere 300 N/mm² bei 60 µm.
Diese Festigkeit erhöht sich mit zunehmender Dicke, weil der Faseranteil überproportional zum Gesamtmaterial steigt.
Das Klebeband weist eine erhebliche Zugfestigkeit sowie Weiterreißfestigkeit in Querrichtung auf. Darüber hinaus ist nur geringfügig dehnbar, und das alles bei einer sehr geringen Dicke.

Die oben genannten Schritte führen zu Klebebändern mit hoher Festigkeit, die aber in ihrer Dicke deutlich unter Klebebändern des Standes der Technik für entsprechende Einsatzgebiete liegen. So lassen sich Klebebänder von unter 140 µm, besonders von unter 100 µm, ganz besonders von unter 60 µm erzeugen, und das überraschend bei vergleichbarer Rissfestigkeit.

Vorteilhaft lässt sich das erfindungsgemäße Klebeband in den Anwendungsfeldern, wie sie in der US 2,750,315 A beschrieben sind, einsetzen. Dazu zählen zum Beispiel das Bündeln, das Verpacken, das Palettisieren, die Verwendung ähnlich einem Spanngurtes etc. Die Gemeinsamkeit der genannten Anwendungen ist die Fixierung eines oder mehrerer Gegenstände an sich selbst, aneinander oder an weiteren Objekten.

Neben den oben genannten Anwendungen ist das Klebeband hervorragend geeignet für alle Aufgaben, bei denen eine verstärkende Wirkung last-tragender Elemente in Kombination oder wahlweise einzeln mit Ein- und Weiterreißfestigkeit benötigt wird.
Verstärkt werden können zum Beispiel Materialien wie Papier, Well- oder Vollpappe vorzugsweise an exponierten Stellen wie Eingriffen, Henkeln und Auslässen. Außerdem kann das Tape als konstruktives Element verwendet werden um zum Beispiel das Ausbeulen schwererer Verpackungen zu verhindern.
Gerade auf Papier oder Pappe kommen die Vorteile der gefärbten Bindersicht zum Tragen. Falls etwas Klebemasse beim Entfernen des Klebebands umspult und auf dem Untergrund verbleibt, so ist diese Klebemasse vorzugsweise transparent und somit nahezu unsichtbar, während das Klebeband durch den Binder gefärbt ist.

Hieraus ergeben sich Vorteile wie
- das Aufwerten von Verpackungen für höhere Beanspruchungen
- die Reduktion des Gesamtmaterialeinsatzes durch gezielte Verstärkung der Hauptbelastungszonen
- die Erhöhung der Verwendungsdauer einer Verpackung

Anhand der nachfolgend beschriebenen Figur wird die Erfindung näher erläutert, ohne damit diese unnötig einschränken zu wollen.

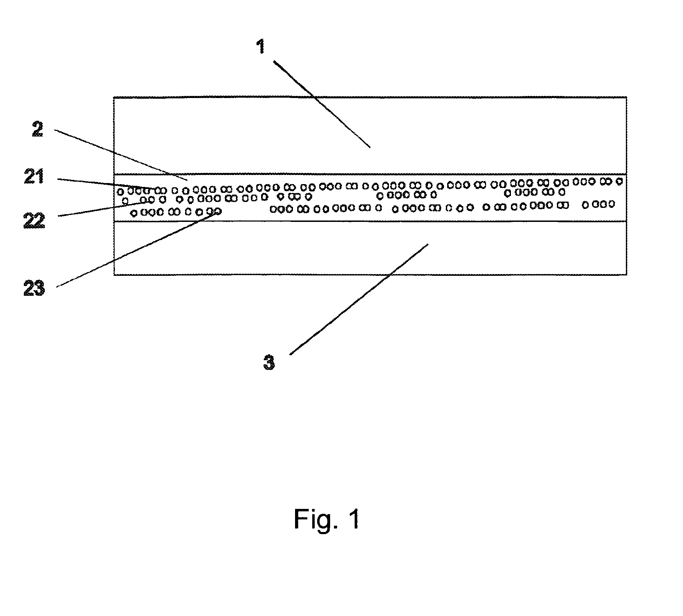

Es zeigt
- Figur 1: das Klebeband im seitlichen Schnitt.

Das Klebeband weist ein Trägermaterial auf, auf das zumindest einseitig eine Klebemasse 3, insbesondere Haftklebemasse aufgebracht ist. Das Trägermaterial besteht aus einem Stützträger 1 aus einer Kunststofffolie sowie eine Binderschicht 2, die zwischen Stützträger 1 und der einen Klebemasseschicht 3 angeordnet ist.
In der Binderschicht 2 sind insgesamt drei Lagen 21, 22, 23 Einzelfilamente vorhanden, wobei die Lagen 21, 22, 23 zum Stützträger parallel ausgerichtet sind. Jedes Filament ist dabei vollständig vom Binder 2 umschlossen.
Die Filamente sind dabei in den Lagen 21, 22, 23 jeweils parallel angeordnet, wobei bevorzugt die Filamente nahezu in direkten Kontakt zueinander stehen.

## Patentansprüche

1. Klebeband mit einem Trägermaterial, auf das zumindest einseitig eine Klebemasse, insbesondere Haftklebemasse aufgebracht ist, wobei das Trägermaterial einen Stützträger aus einer Kunststofffolie oder einem Papier sowie eine Binderschicht, die zwischen Stützträger und einer Klebemasseschicht angeordnet ist, aufweist und das Trägermaterial nichthaftklebrig ist,
**dadurch gekennzeichnet, dass**
der Binder der Binderschicht auf Mischungen aus SBR oder Acrylat basiert und in der Binderschicht ungezwirnte und ungetengelte Einzelfilamente in Längsrichtung eingelassen sind, die vollständig von der Binderschicht umschlossen sind und die eine Feinheit zwischen 4 und 8 dtex aufweisen.

2. Klebeband nach Anspruch 1, **dadurch gekennzeichnet, dass**
die Einzelfilamente Endlosfilamente sind.

3. Klebeband nach Anspruch 1 oder 2, **dadurch gekennzeichnet, dass**
die Einzelfilamente in einer zum Stützträger parallel ausgerichteten Lage oder höchstens in drei zum Stützträger parallel ausgerichteten Lagen angeordnet sind.

4. Klebeband nach zumindest einem der Ansprüche 1 bis 3, **dadurch gekennzeichnet, dass**
die Einzelfilamente aus hochfesten Fasern geringer Reißdehnung wie zum Beispiel Glasfasern oder Kohlenstofffasern (Carbon) oder auch aus verstreckten Polymerfasern wie Polyesterfasern, Polypropylenfasern, Polyethylenfasern, Polyamidfasern oder AramidFasern bestehen.

5. Klebeband nach zumindest einem der vorherigen Ansprüche, **dadurch gekennzeichnet, dass**
sich zwischen 400 und 800 Filamente pro Zentimeter Breite in dem Trägermaterial, insbesondere zwischen 500 und 600, ganz besonders bevorzugt 550 befinden.

6. Klebeband nach zumindest einem der vorherigen Ansprüche, **dadurch gekennzeichnet, dass**
der Binder mit 10 bis 30, bevorzugt 10 bis 20, ganz besonders bevorzugt 15 bis 17 g/m² auf die Stützfolie aufgebracht wird.

7. Klebeband nach zumindest einem der vorherigen Ansprüche, **dadurch gekennzeichnet, dass**
der Stützträger eine Dicke aufweist von bis zu 50 µm, vorzugsweise 5 bis 25 µm, ganz besonders vorzugsweise 5 bis 15 µm.

8. Klebeband nach zumindest einem der vorherigen Ansprüche, **dadurch gekennzeichnet, dass**
der Auftrag an Klebemasse auf das Trägermaterial zwischen 15 bis 60 g/m², vorzugsweise zwischen 20 bis 30 g/m² beträgt.

9. Klebeband nach zumindest einem der vorherigen Ansprüche, **dadurch gekennzeichnet, dass**
die Festigkeit des Trägermaterials mindestens 250 N/mm² bei 60 µm Dicke, insbesondere 300 N/mm² beträgt.

10. Verwendung eines Klebebands nach zumindest einem der vorherigen Ansprüche zum Bündeln, Verpacken, Palettisieren.

11. Verwendung eines Klebebands nach zumindest einem der vorherigen Ansprüche als Verstärkungsband auf Papier, Well- oder Vollpappe, vorzugsweise an exponierten Stellen wie Eingriffen, Henkeln und Auslässen.

## Claims

1. Adhesive tape having a backing material applied to at least one side of which is an adhesive, in particular a pressure-sensitive adhesive, the backing material having a support backing composed of a polymeric film or of paper, and having a binder layer disposed between support backing and a layer of adhesive, and the backing material not being pressure-sensitively adhesive
**characterized in that**
the binder of the binder layer is based on mixtures of SBR or acrylate, and set into the binder layer in the lengthwise direction and entirely surrounded by the binder layer are non-twisted and non-tangled individual filaments which have a linear density of between 4 and 8 dtex.

2. Adhesive tape according to Claim 1, **characterized in that**
the individual filaments are continuous filaments.

3. Adhesive tape according to Claim 1 or 2,
**characterized in that**
the individual filaments are disposed in one ply parallel to the support backing or at most in three plies parallel to the support backing.

4. Adhesive tape according to at least one of Claims 1 to 3, **characterized in that** the individual filaments are composed of high-strength fibres of low breaking extension, such as glass fibres or carbon fibres, for example, or else of drawn polymer fibres such as polyester fibres, polypropylene fibres, polyethylene fibres, polyamide fibres or aramid fibres.

5. Adhesive tape according to at least one of the preceding claims, **characterized in that** there are between 400 and 800 filaments per centimetre width in the backing material, in particular between 500 and 600, very preferably 550.

6. Adhesive tape according to at least one of the preceding claims, **characterized in that** the binder is applied to the support sheet at 10 to 30, preferably 10 to 20, more preferably 15 to 17 g_{/m}²_{.}

7. Adhesive tape according to at least one of the preceding claims, **characterized in that** the support backing has a thickness of up to 50 µm, preferably 5 to 25 µm, very preferably 5 to 15 µm.

8. Adhesive tape according to at least one of the preceding claims, **characterized in that** the application of adhesive to the backing material amounts to between 15 to 60 g/m², preferably between 20 to 30 g/m².

9. Adhesive tape according to at least one of the preceding claims, **characterized in that** the strength of the backing material is at least 250 N/mm² for 60 µm thickness, in particular 300 N/mm²_{.}

10. Use of an adhesive tape according to at least one of the preceding claims for bundling, packaging, and palletizing.

11. Use of an adhesive tape according to at least one of the preceding claims as reinforcing tape on paper, corrugated board, or solid board, preferably at exposed positions such as grips, handles and cutouts.

## Revendications

1. Bande adhésive présentant un matériau support sur lequel est appliquée, au moins sur une face, une masse adhésive, en particulier une masse autoadhésive, le matériau support présentant un support d'appui en feuille synthétique ou en papier ainsi qu'une couche de liant, qui est disposée entre le support d'appui et une couche de masse adhésive et le matériau support étant non adhésif, **caractérisée en ce que** le liant de la couche de liant est à base de mélanges de SBR ou d'acrylate et des filaments individuels sans torsion et non enchevêtrés sont introduits dans le sens longitudinal dans la couche de liant, qui sont totalement entourés par la couche de liant et qui présentent une finesse entre 4 et 8 dtex.

2. Bande adhésive selon la revendication 1, **caractérisée en ce que** les filaments individuels sont des filaments sans fin.

3. Bande adhésive selon la revendication 1 ou 2, **caractérisée en ce que** les filaments individuels sont disposés dans une couche orientée parallèlement par rapport au support d'appui ou au plus dans trois couches orientées parallèlement par rapport au support d'appui.

4. Bande adhésive selon au moins l'une quelconque des revendications 1 à 3, **caractérisée en ce que** les filaments individuels sont constitués par des fibres hautement résistantes de faible allongement à la rupture telles que par exemple des fibres de verre ou des fibres de carbone (Carbon) ou également des fibres polymères étirées telles que des fibres de polyester, de polypropylène, de polyéthylène, de polyamide ou d'aramide.

5. Bande adhésive selon au moins l'une quelconque des revendications précédentes, **caractérisée en ce qu'**il existe entre 400 et 800 filaments par centimètre de largeur dans le matériau support, en particulier entre 500 et 600, de manière tout particulièrement préférée 550.

6. Bande adhésive selon au moins l'une quelconque des revendications précédentes, **caractérisée en ce que** le liant est appliqué sur la feuille d'appui à raison de 10 à 30, de préférence de 10 à 20, de manière tout particulièrement préférée de 15 à 17 g/m².

7. Bande adhésive selon au moins l'une quelconque des revendications précédentes, **caractérisée en ce que** le support d'appui présente une épaisseur de jusqu'à 50 µm, de préférence de 5 µm à 25 µm, de manière tout particulièrement préférée de 5 µm à 15 µm.

8. Bande adhésive selon au moins l'une quelconque des revendications précédentes, **caractérisée en ce que** l'application de la masse adhésive sur le matériau support est située entre 15 et 60 g/m², de préférence entre 20 et 30 g/m².

9. Bande adhésive selon au moins l'une quelconque des revendications précédentes, **caractérisée en ce que** la résistance du matériau support est d'au moins 250 N/mm² à une épaisseur de 60 µm, en particulier de 300 N/mm²_{.}

10. Utilisation d'une bande adhésive selon au moins l'une quelconque des revendications précédentes pour l'empaquetage, l'emballage, la palettisation.

11. Utilisation d'une bande adhésive selon au moins l'une quelconque des revendications précédentes comme bande de renforcement sur du papier, du carton plein ou ondulé, de préférence en des endroits exposés, tels que les poignées, les anses et les évacuations.
